# EUROPÄISCHE PATENTSCHRIFT

(11) **EP 0 720 537 B1**
(45) Veröffentlichungstag und Bekanntmachung des Hinweises auf die Patenterteilung: **01.04.1998**
(21) Anmeldenummer: 94928851.8
(22) Anmeldetag: 30.09.1994
(51) Int. Cl.: B60J 7/16

(54) **DACHLUKE, INSBESONDERE FÜR FAHRZEUGDÄCHER**
ROOFLIGHT, ESPECIALLY FOR VEHICLE ROOFS
TABATIERE, NOTAMMENT POUR PAVILLON DE VEHICULE

(30) Priorität: 01.10.1993 DE 4333514
(43) Veröffentlichungstag der Anmeldung: 10.07.1996
(73) Patentinhaber: WEBASTO THERMOSYSTEME GmbH, D-82131 Stockdorf (DE)
(72) Erfinder: FIEGEL, Gunnar, D-82319 Starnberg (DE); PLETTRICHS, Ulf, D-86862 Dillishausen (DE); WALTER, Alexander, D-80796 München (DE); SCHRÖFERL, Thomas, D-82069 Hohenschäftlarn (DE); SOLTANMORADI, Hossein, D-82131 Gauting (DE)
(74) Vertreter: Wiese, Gerhard
(86) Internationale Anmeldenummer: EP9403273
(87) Internationale Veröffentlichungsnummer: WO9509739

(56) Entgegenhaltungen:
- EP-A- 0 308 849
- EP-A- 0 325 380
- EP-A- 0 451 583
- DE-A- 3 503 806
- DE-A- 3 835 018
- US-A- 4 754 695

## Beschreibung

Die Erfindung betrifft eine Dachluke, insbesondere für Fahrzeugdächer, mit einem in einem festen Dach angeordneten Rahmen, dessen Innenrand eine Dachöffnung begrenzt, die durch einen an zwei gegenüberliegenden Seiten des Rahmens über je eine Ausstelleinrichtung gelagerten Deckel durch Betätigen der Ausstelleinrichtungen wahlweise freigebbar oder verschließbar ist, wobei die Ausstelleinrichtungen von einer zentral an der Unterseite des Deckels drehbar gelagerten Steuerscheibe mit wenigstens zwei Kulissenbahnen mittels in diese eingreifende Schubstangen betätigbar sind.

Eine derartige Dachluke ist aus der DE 40 11 903 C1 bekannt. Bei dieser führen die Schubstangen, welche über je einen am Deckel verschiebbar gelagerten Schlitten auf einen Aussteller einwirken, ausschließlich eine Längsbewegung aus. Sie werden zu diesem Zweck mit an ihnen angeordneten Bolzen in Kulissenbahnen geführt, die sich über einen Umfangswinkel von jeweils etwa 270° auf der Steuerscheibe erstrecken. Dadurch, daß die Schubstangen unmittelbar durch die veränderlichen Radien der Kulissenbahnen betätigt werden, sind bei dieser Dachluke zum einen sehr hohe Betätigungskräfte für ein Ausstellen erforderlich und zum anderen unterliegen die Kulissenbahnen und die in ihnen geführten Bolzen der Schubstangen einem erhöhten Verschleiß. Zudem bereitet die Anordnung von zwei ineinander verschlungenen, einen Umfangswinkel von jeweils 270° einnehmenden Kulissenbahnen auf einer Steuerscheibe Schwierigkeiten. Die Kulissenbahnen geraten in bestimmten Bereichen nahe aneinander, wodurch die zwischen ihnen verbleibende Materialstärke der Steuerscheibe gering ist und das Material an diesen Stellen bei starker Beanspruchung gelegentlich zum Ausbrechen neigt.

Der vorliegenden Erfindung liegt die Aufgabe zugrunde, eine Dachluke zu schaffen, deren Ausstelleinrichtungen mit geringen Betätigungskräften und bei geringem Verschleiß bedienbar sind.

Diese Aufgabe wird erfindungsgemäß dadurch gelöst, daß die Schubstangen mit ihrem einen Ende an den Ausstelleinrichtungen drehbar gelagert sind und daß die mit den Kulissenbahnen im Eingriff stehenden anderen Enden der Schubstangen zusätzlich an deckelfesten, im wesentlichen kreisbogenförmigen Führungsbahnen geführt sind. Dadurch, daß zusätzlich zu den Kulissenbahnen am Deckel fest angeordnete Führungsbahnen vorgesehen sind, werden die in die Steuerscheibe eingeleiteten Kräfte optimal an die Schubstangen weitergeleitet. Aufgrund der im wesentlichen kreisbogenförmig gestalteten Führungsbahnen ist der Verschleiß an diesen wesentlich geringer als bei Kulissenbahnen mit ständig wechselnden Radien und entsprechend abgeknickten Übergangsbereichen. Vorteilhafte Ausgestaltungen der Erfindung sind den Unteransprüchen entnehmbar.

In einer vorteilhaften Weiterbildung ist die Führungsbahn für die eine Schubstange in etwa halbkreisförmig und die Führungsbahn der anderen Schubstange in etwa viertelkreisförmig ausgebildet. Diese Ausgestaltung sorgt zum einen dafür, daß genügend Material zwischen den Führungsbahnen verbleibt und schafft zum anderen die Voraussetzung dafür, daß ein wechselseitiges oder gemeinsames Ausstellen der beiden Ausstellvorrichtungen bei einem Drehwinkel der Steuerscheibe von nur 180° realisiert werden kann. Dadurch wird die Betätigung der erfindungsgemäßen Dachluke wesentlich vereinfacht.

Vorteilhaft ist es ferner, wenn die Führungsbahnen an bezüglich der Drehachse der Steuerscheibe gegenüberliegenden Enden je einen radial nach innen gerichteten Abschnitt aufweisen. Mittels dieser radial nach innen gerichteten Abschnitte läßt sich im zusammenwirken mit den Kulissenbahnen auf der Steuerscheibe eine einfache gegenseitige Verriegelung in der Schließposition erreichen. Die Kulissenbahnen weisen in diesem Zusammenhang vorteilhafterweise bezüglich der Drehachse der Steuerscheibe gegenüberliegend je einen eine radiale und eine tangentiale Komponente umfassenden Abschnitt auf, wobei dessen radiale Ausdehnung der Länge der radialen Abschnitte an den Führungsbahnen entspricht. Mittels dieser eine radiale und eine tangentiale Komponente umfassenden Abschnitte an den Kulissenbahnen lassen sich die an den Schubstangen angeordneten Bolzen mit geringem Kraftaufwand in die radialen Abschnitte an den Führungsbahnen hinein- und aus diesen heraus bewegen. In einer besonders vorteilhaften Ausgestaltung der Erfindung besteht eine der Kulissenbahnen nur aus diesem vorstehend bezeichneten mit einer radialen und einer tangentialen Komponente versehenen Abschnitt, während die andere zusätzlich einen etwa viertelkreisförmigen Teil aufweist.

Für eine vereinfachte Herstellung einer erfindungsgemäßen Dachluke und im Hinblick auf die Verwendung von Gleichteilen bei den Schubstangen und den Ausstelleinrichtungen ist es vorteilhaft, wenn die Führungsbahnen konzentrisch zur Drehachse der Steuerscheibe angeordnet sind. Für die gleiche Zielstellung ist es förderlich, wenn die Führungsbahnen denselben Radius aufweisen.

Eine Betätigung der Dachluke kann vorteilhaft durch einen an der Steuerscheibe angeordneten Drehgriff erfolgen. Alternativ dazu ist an der Steuerscheibe eine Verzahnung vorgesehen, in die ein Antriebsritzel eines Elektromotors eingreift.

Die Betätigung einer erfindungsgemäßen Dachluke wird vorteilhaft so gestaltet, daß ausgehend von einer Nullage sowohl ein wechselweises als auch ein gleichzeitiges Ausstellen der mit den Ausstelleinrichtungen verbundenen Deckelenden bei einem Drehwinkel von 180° der Steuerscheibe ansteuerbar ist.

Nachfolgend ist ein Ausführungsbeispiel der Erfindung anhand der Zeichnung beschrieben. Es zeigt:
- Fig. 1: eine schematische perspektivische Ansicht einer Dachluke mit ausgestellter Deckelvorderkante,
- Fig. 2: eine schematische Darstellung der Steuerscheibe und der Schubstangen in der Grundstellung bei voll geschlossenem Deckel,
- Fig. 3 - Fig. 5: Abwandlungen zur Fig. 2 für verschiedene Bewegungsphasen des Deckels und
- Fig. 6: eine schematische Darstellung eines manuellen Bedienelementes.

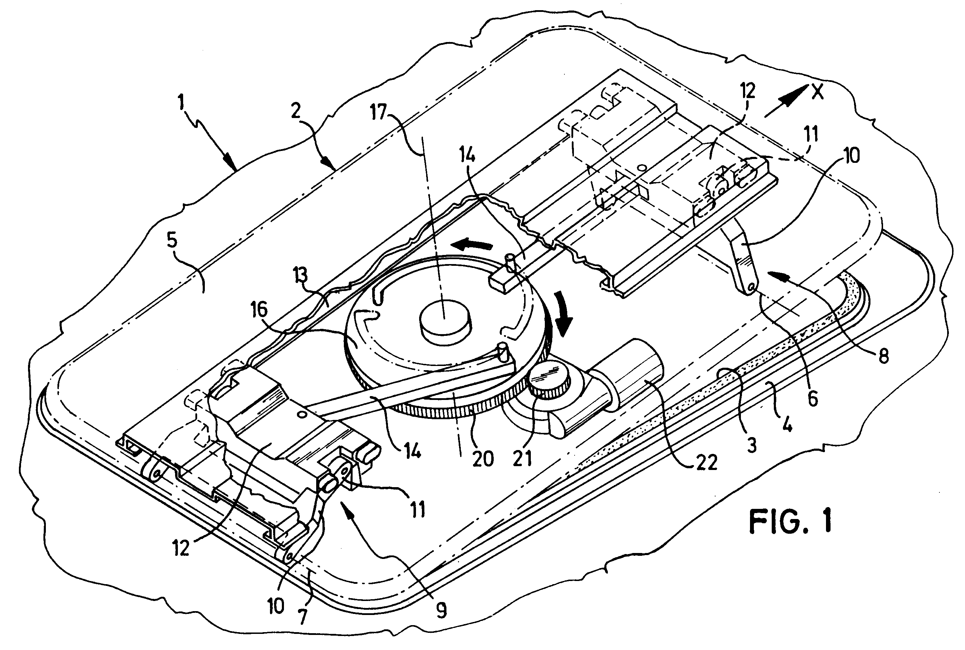

In ein festes Fahrzeugdach 1, vorzugsweise eines Omnibusses, ist eine Dachluke 2 eingesetzt. Ihr Rahmen 4 begrenzt mit seinem inneren Rand eine Dachöffnung 3. Die Dachöffnung 3 wird von einem Deckel 5 in Grundstellung verschlossen. Zur Herstellung verschiedener Lüftungspositionen ist der Deckel 5 bezüglich der Fahrtrichtung X wechselweise mit seiner in der Fig. 1 links liegenden Hinterkante, mit der in Fig. 1 ausgestellt dargestellten Vorderkante oder gleichzeitig mit seinem vorderen und hinteren Ende ausstellbar. Die Ausstellung der Hinterkante des Deckels 5 erfolgt um eine Achse 7, während die Ausstellbewegung der Vorderkante des Deckels 5 durch eine Schwenkbewegung um eine Achse 6 erfolgt. Im Bereich der Achse 6 ist am Rahmen 4 eine Schwenklagerung 8 und im Bereich der Achse 7 eine Schwenklagerung 9 vorgesehen. In dieser Schwenklagerung 8 bzw. 9 ist je ein Ausstellhebel 10 schwenkbar am Rahmen 4 angelenkt. Das andere Ende dieses Ausstellhebels 10 ist jeweils in einem Gelenk 11 an einem Schlitten 12 befestigt, der jeweils an einem in Fahrtrichtung angeordneten Stück einer Schiene 13 in Längsrichtung verfahrbar ist. An den Schlitten 12 ist jeweils eine Schubstange 14 drehbar angelenkt, deren anderes Ende über einen Bolzen 15 zum einen mit Kulissenbahnen 18 bzw. 19 auf einer Steuerscheibe 16 und zum anderen mit fest an der Innenseite des Deckels 5 angeordneten Führungsbahnen 23 bzw. 24 im Eingriff steht. Die Steuerscheibe 16 ist am Deckel 5 mittels einer Drehachse 17 drehbar gelagert. Die erste Kulissenbahn 18 auf der Steuerscheibe 16 besteht nur aus einem kurzen Abschnitt 18A, welcher bezüglich der Drehachse 17 der Steuerscheibe 16 sowohl eine radiale als auch eine tangentiale Komponente aufweist. In diesem Abschnitt 18A greift der Bolzen 15 der Schubstange 14 ein, welche zur Ausstellung der Deckelhinterkante (in Fig. 1 links) dient. Um etwa 90° versetzt zur ersten Kulissenbahn 18 (und entsprechend dem Abschnitt 18A) beginnt die zweite Kulissenbahn 19, welche etwa die Form eines Viertelkreises hat und an ihrem anderen Ende gegenüberliegend dem Abschnitt 18A einen Abschnitt 19A aufweist, der ebenfalls eine tangentiale und eine nach innen zur Drehachse 17 hin gerichtete radiale Komponente aufweist. In die zweite Kulissenbahn 19 bzw. den Abschnitt 19A greift der Bolzen 15 der Schubstange 14 ein, welche zur Betätigung der Deckelvorderkante (in Fig. 1 rechts) dient.

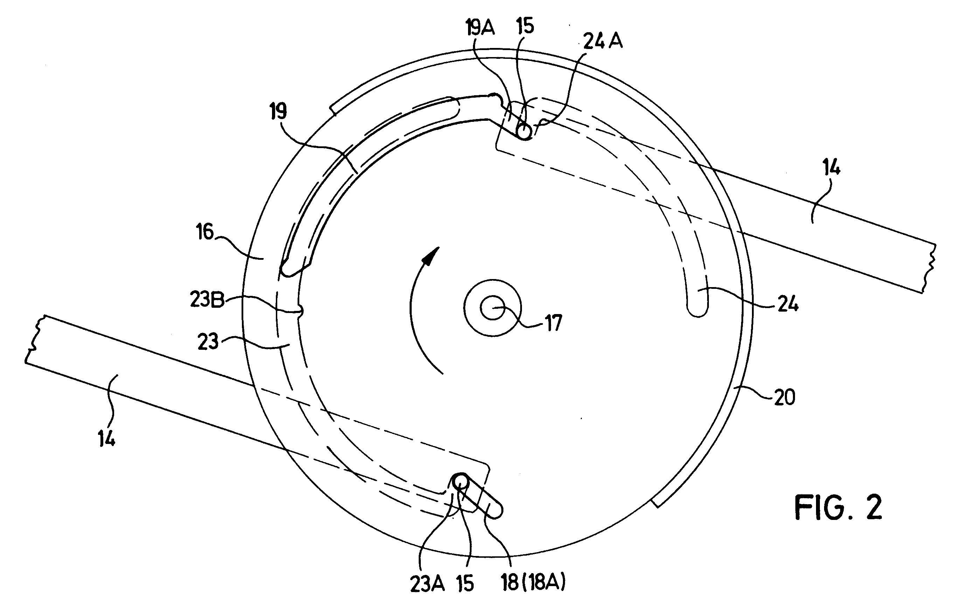

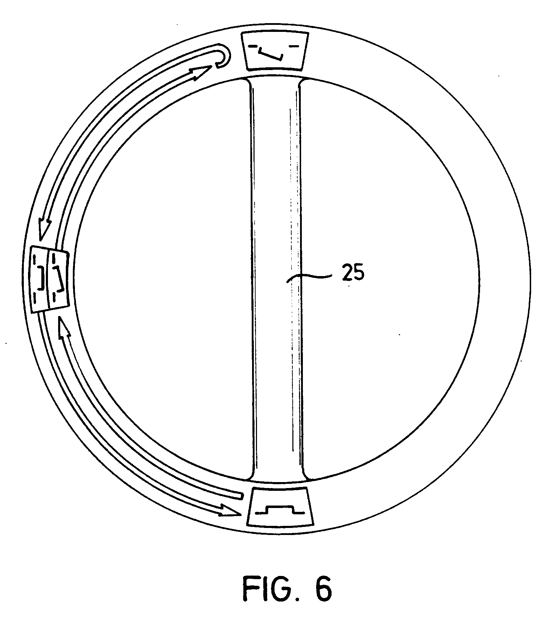

Der Bolzen 15 der Schubstange 14, die zur Betätigung der Deckelhinterkante dient, greift außer in den Abschnitt 18A auch in eine auf der Deckelinnenseite fest angeordnete Führungsbahn 23 ein. Diese hat etwa die Form eines Halbkreises, der konzentrisch zur Drehachse 17 angeordnet ist und an seiner Innenkante einen geringfügig größeren Radius aufweist, als die Kulissenbahn 19. In der Mitte der halbkreisförmigen Führungsbahn 23 befindet sich an der Innenkante eine halbkreisförmige Ausnehmung 23B und an dem in Fig. 2 unten liegenden Ende ist ein kurzer radial nach innen gerichteter Abschnitt 23A vorgesehen. Die Mitte der halbkreisförmigen Führungsbahn 23, markiert durch die Ausnehmung 23B, weist auf der Längsachse des Deckels 5 liegend zu dessen Hinterkante. Ebenfalls konzentrisch zur Drehachse 17 und mit gleichem Radius wie die Führungsbahn 23 ist eine weitere Führungsbahn 24 an der Innenseite des Deckels vorgesehen. Die Führungsbahn 24 beginnt gegenüberliegend (bzgl. der Drehachse 17 gesehen) des radialen Abschnitts 23A mit einem ebensolchen radial nach innen zur Drehachse 17 hin ausgerichteten kurzen Abschnitt 24A und erstreckt sich ausgehend von diesem etwa bis zur Längsachse des Deckels in Richtung auf dessen Vorderkante. Zur Betätigung der Steuerscheibe 16 kann diese wahlweise an ihrer dem Fahrgastraum zugewandten Innenseite mit einem in Fig. 6 schematisch dargestellten Drehgriff 25 verbunden sein oder, wie in Fig. 1 dargestellt, an etwa der Hälfte ihres Außenumfangs eine Verzahnung 20 aufweisen, in welche ein Ritzel 21 eines Elektromotors 22 eingreift.

Ausgehend von der Grundstellung, die in Fig. 2 schematisch dargestellt ist, und in der sowohl die Hinterkante als auch die Vorderkante des Deckels 5 geschlossen sind, soll nun die Funktion der Kulissenbahnen und der Führungsbahnen in Verbindung mit den die Ausstellhebel 10 betätigenden Schubstangen 14 beschrieben werden. In Fig. 2 befinden sich die Bolzen 15 an beiden Schubstangen 14 jeweils am inneren Ende der radialen Abschnitte 23A bzw. 24A der deckelfesten Führungsbahnen 23 bzw. 24. Gleichzeitig liegen die Bolzen 15 am äußersten inneren Ende der Abschnitte 18A bzw. 19A auf der Steuerscheibe 16 an, wodurch eine stabile Verriegelung der Schubstangen in der Grundstellung gewährleistet ist.

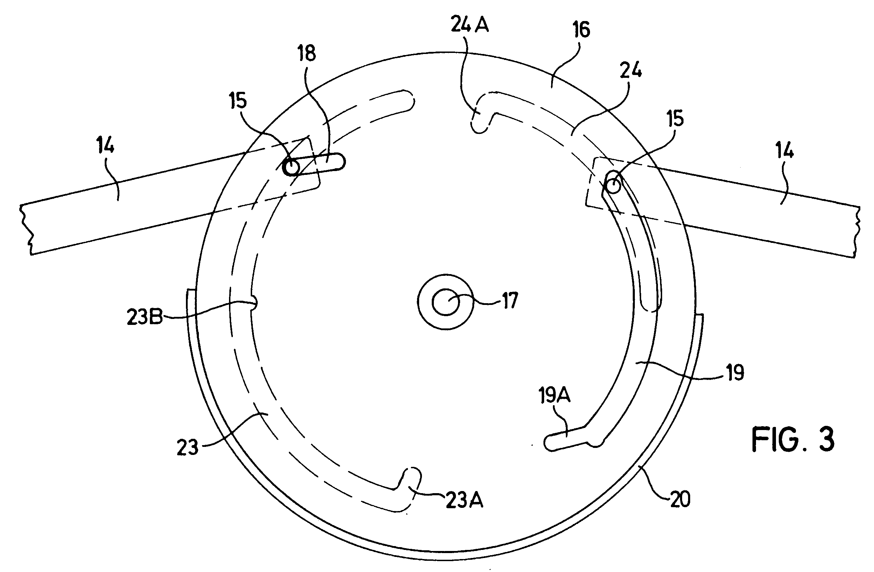

Um ausgehend von der in Fig. 2 gezeigten Grundstellung zunächst die Hinterkante des Deckels 5 auszustellen, wird die Steuerscheibe 16 um 90° nach rechts in Pfeilrichtung gedreht. Dabei werden die Bolzen 15 zunächst durch die inneren Flanken der Abschnitte 18A bzw. 19A in den radialen Abschnitten 23A bzw. 24A nach außen bewegt. Durch diese radiale Bewegung nach außen wird die Verriegelung der Grundposition aufgehoben. Anschließend nimmt das äußere Ende des Abschnitts 18A den in Fig. 2 unten liegenden Bolzen 15 um 90° mit, bis dieser die Ausnehmung 23B erreicht. In dieser Position ist die Schubstange 14 etwa um den Betrag des Radius der Führungsbahn 23 nach links verschoben worden und hat dabei über den in Fig. 1 links liegenden Schlitten 12 den Ausstellhebel 10 für das Anheben der Deckelhinterkante betätigt. Während dieser ersten 90°-Drehbewegung bleibt die andere, für die Ausstellung der Deckelvorderkante zuständige Schubstange 14 unverändert in ihrer in Fig. 2 dargestellten Position. Dies wird dadurch ermöglicht, weil der zugeordnete Bolzen 15 aufgrund der Kulissenbahn 19, die in einem Leerweg an ihm vorbei gleitet, stehen bleibt. Die Ausnehmung 23B dient zur Sicherung der ausgestellten Position der Hinterkante des Deckels 5. Falls Windkräfte auf das Deckelende einwirken, wird der Bolzen 15 der zugeordneten Schubstange 14 in diese Ausnehmung 23B gedrückt. Eine Weiterbewegung des Bolzens 15 ist nur zwangsweise durch eine Weiterdrehung der Steuerscheibe 16 möglich. Eine solche Weiterdrehung ist in Fig. 3 dargestellt. Der Abschnitt 18A hat den für die Ausstellung der Deckelhinterkante zuständigen Bolzen 15 bei einer weiteren Drehung der Steuerscheibe 16 nach rechts aus der Ausnehmung 23B mitgenommen und gleichzeitig wird der Bolzen 15 der anderen, für die Ausstellung der Deckelvorderkante zuständigen Schubstange 14 durch das hintere Ende der Kulissenbahn 19 mitgenommen. Bei der in Fig. 3 dargestellten Bewegung schließt sich der Deckel 5 an der Hinterkante und stellt sich gleichzeitig an der Vorderkante aus.

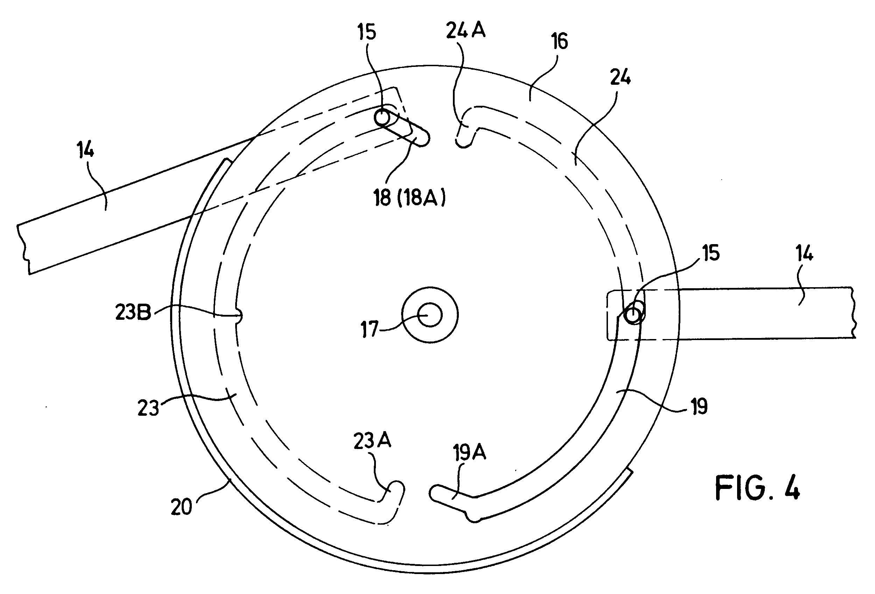

In Fig. 4 ist ein Zustand kurz vor Erreichen einer 180°-Position dargestellt, in welcher das in Fig. 1 rechts liegende Deckelende (Vorderkante) ausgestellt und das in Fig. 1 links liegende Deckelende (Hinterkante) abgesenkt ist. Zur Verriegelung in dieser Position muß die Steuerscheibe 16 noch eine weitere leichte Drehung nach rechts vollziehen.

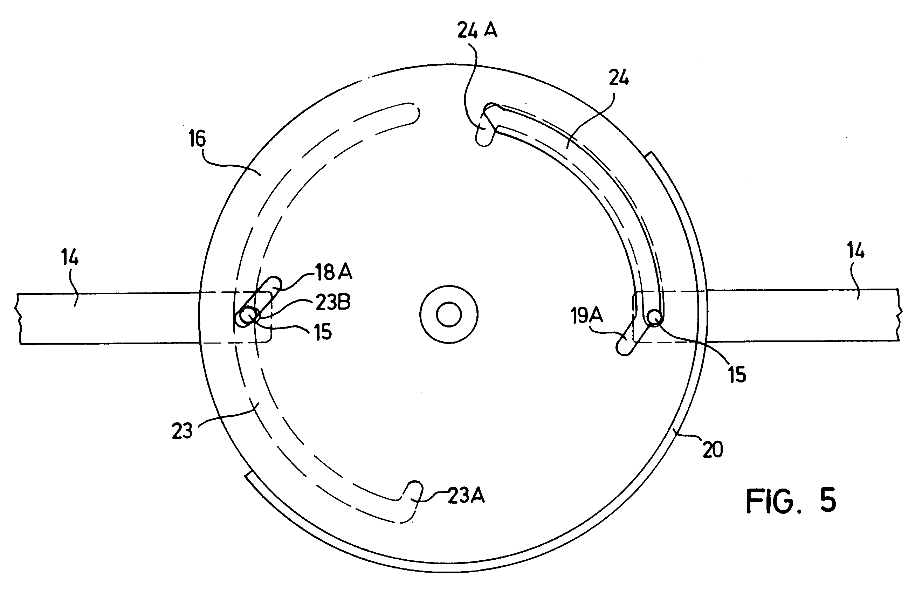

Eine weitere Drehung nach rechts ist danach nicht mehr möglich. Vielmehr muß das Betätigungselement (Drehgriff 25) bzw. der Elektromotor 22 die Steuerscheibe 16 um 90° zurück nach links drehen. Dabei bleibt der für die Ausstellung der Deckelvorderkante verantwortliche Bolzen 15 aufgrund der in Form eines Leerweges an ihm vorbei gleitenden Kulissenbahn 19 unverändert in seiner Ausstellposition. Der andere Bolzen 15 wird hingegen durch die kurze Kulissenbahn 18 um 90° nach links mitgenommen und stellt dabei über die ihm zugeordnete Schubstange 14 die Hinterkante des Deckels 5 erneut aus. Bei dieser in Fig. 5 dargestellten Lage ist somit der Deckel 5 sowohl an seiner Vorderkante als auch an seiner Hinterkante in eine Lüftungsposition ausgestellt. Eine weitere Drehung der Steuerscheibe 16 um 90° nach links führt zurück in die in Fig. 2 gezeigte Ausgangsposition. Hierbei werden beide Bolzen 15 durch die Kulissenbahnen 18 bzw. 19 um 90° mit nach links gedreht, wodurch die mit den zugeordneten Schubstangen 14 verbundenen Ausstellhebel 10 ein Einschwenken des vorderen und des hinteren Deckelendes bewirken. In der Endlage werden die Bolzen 15 wiederum durch die Abschnitte 18A bzw. 19A auf der Steuerscheibe 16 in die radialen Abschnitte 23A bzw. 24A der Führungsbahnen 23, 24 und somit in die Verriegelungsposition gedrückt.

Wie in Fig. 6 deutlich zu erkennen vollzieht sich ein wechselweises Ausstellen zunächst der Deckelhinterkante und dann der Deckelvorderkante ausgehend von einer Nullposition über einen Drehwinkel von nur 180°. Bei der Zurückdrehung nach links um den gleichen Betrag wird 90° vor Erreichen der Nullposition die vollständig ausgestellte Lage des Deckels 5 erreicht. Das in Fig. 6 dargestellte Bedienelement 25 ist aufgrund der durch die beschriebene Mechanik erforderlichen geringen Reibungsverluste und Antriebskräfte leicht bedienbar und aufgrund der durch die Pfeile und die Ausstellsymbole angedeuteten Markierungen auch leicht in sinnfälliger Weise zu betätigen.

### Bezugszeichenliste

- 1: festes Fahrzeugdach
- 2: Dachluke
- 3: Dachöffnung
- 4: Rahmen
- 5: Deckel
- 6: Achse
- 7: Achse
- 8: Schwenklagerung
- 9: Schwenklagerung
- 10: Ausstellhebel
- 11: Gelenk
- 12: Schlitten
- 13: Schiene
- 14: Schubstange
- 15: Bolzen
- 16: Steuerscheibe
- 17: Drehachse (von 16)
- 18,18A: (erste) Kulissenbahn (=Abschnitt)
- 19,19A: (zweite) Kulissenbahn (=Abschnitt)
- 20: Verzahnung (an 16)
- 21: Ritzel
- 22: Elektromotor
- 23: (erste) Führungsbahn
- 23A: (radialer) Abschnitt (von 23)
- 23B: (kreissegmentförmige) Ausnehmung (an 23)
- 24: (zweite) Führungsbahn
- 24A: (radialer) Abschnitt (von 24)
- 25: Drehgriff
- X: Fahrtrichtung

## Patentansprüche

1. Dachluke (2) insbesondere für Fahrzeugdächer, mit einem in einem festen Dach (1) angeordneten Rahmen (4), dessen Innenrand eine Dachöffnung (3) begrenzt, die durch einen an zwei gegenüberliegenden Seiten des Rahmens (4) über je eine Ausstelleinrichtung (10;12) gelagerten Deckel (5) durch Betätigen der Ausstelleinrichtungen (10;12) wahlweise freigebbar oder verschließbar ist, wobei die Ausstelleinrichtungen (10;12) von einer zentral an der Unterseite des Deckels (5) drehbar gelagerten Steuerscheibe (16) mit wenigstens zwei Kulissenbahnen (18,19) mittels in diese eingreifender Schubstangen (14) betätigbar sind, **dadurch gekennzeichnet,** daß die Schubstangen (14) mit ihrem einen Ende an den Ausstelleinrichtungen (Schlitten 12) drehbar gelagert sind und daß die mit den Kulissenbahnen (18,19) im Eingriff stehenden anderen Enden der Schubstangen (14) zusätzlich an deckelfesten, im wesentlichen kreisbogenförmigen Führungsbahnen (23,24) geführt sind.

2. Dachluke (2) nach Anspruch 1, **dadurch gekennzeichnet**, daß die Führungsbahn (23) für die eine Schubstange (14) in etwa halbkreisförmig und die Führungsbahn (24) der anderen Schubstange (14) in etwa viertelkreisförmig ist.

3. Dachluke (2) nach einem der vorhergehenden Ansprüche, **dadurch gekennzeichnet**, daß die Führungsbahnen (23,24) an bezüglich der Drehachse (17) der Steuerscheibe (16) gegenüberliegenden Enden je einen radial nach innen gerichteten Abschnitt (23A,24A) aufweisen.

4. Dachluke (2) nach Anspruch 3, **dadurch gekennzeichnet**, daß die Kulissenbahnen (18,19) bezüglich der Drehachse (17) der Steuerscheibe (16) gegenüberliegend je einen eine radiale und eine tangentiale Komponente umfassenden Abschnitt (18A,19A) aufweisen, wobei deren radiale Ausdehnung der radialen Länge der Abschnitte (23A,24A) an den Führungsbahnen (23,24) entspricht.

5. Dachluke (2) nach Anspruch 4, **dadurch gekennzeichnet**, daß eine der Kulissenbahnen (18) nur aus dem Abschnitt (18A) besteht, während die andere (19) zusätzlich einen etwa viertelkreisförmigen Teil aufweist.

6. Dachluke (2) nach einem der vorhergehenden Ansprüche, **dadurch gekennzeichnet**, daß die Führungsbahnen (23,24) konzentrisch zur Drehachse (17) der Steuerscheibe (16) angeordnet sind.

7. Dachluke (2) nach Anspruch 6, **dadurch gekennzeichnet**, daß beide Führungsbahnen (23,24) denselben Radius aufweisen.

8. Dachluke (2) nach einem der vorhergehenden Ansprüche, **dadurch gekennzeichnet**, daß an der Steuerscheibe (16) ein Drehgriff (25) angeordnet ist.

9. Dachluke (2) nach einem der Ansprüche 1 bis 7, **dadurch gekennzeichnet**, daß an der Steuerscheibe (16) eine Verzahnung (20) vorgesehen ist, in die ein Antriebsritzel (21) eines Elektromotors (22) eingreift.

10. Dachluke (2) nach einem der vorhergehenden Ansprüche, **dadurch gekennzeichnet**, daß ausgehend von einer Nullage sowohl ein wechselweises als auch ein gleichzeitiges Ausstellen der mit den Ausstelleinrichtungen (10) verbundenen Deckelenden bei einem Drehwinkel von 180° der Steuerscheibe (16) ansteuerbar sind.

## Claims

1. A roof hatch (2) particularly for vehicle roofs, with a frame (4) disposed in a fixed roof (1), the inner edge of which defines a roof opening (3) which can be optionally opened or closed by a cover (5) adapted to be opened or closed as desired by actuation of the push-out devices (10; 12) by which the said cover (5) is mounted on two opposite sides of the frame (4), whereby the push-out devices (10; 12) can be activated by a control cam (16) rotatably mounted centrally on the underside of the cover (5) and having at least two cam surfaces (18, 19) which are engaged by push rods, characterised in that the push rods (14) have one end rotatably mounted on the push-out devices (sliding element 12) and in that the other ends of the push rods (14) which engage the cam surfaces (18, 19) are additionally guided on substantially arcuate guideways (23, 24) fixed to the cover.

2. A roof hatch (2) according to Claim 1, characterised in that the guideway (23) for one push rod (14) is approximately semi-circular while the guideway (24) for the other push rod (14) is approximately quadrantal.

3. A roof hatch (2) according to one of the preceding Claims, characterised in that the guideways (23, 24) each have a radially inwardly directed portion (23A, 24A) at ends which, in respect of the axis of rotation (17), are opposite the control cam (16).

4. A roof hatch (2) according to Claim 3, characterised in that the cam surfaces (18, 19) each comprise, opposite the control cam (16) in relation to the axis of rotation (17), a portion (18A, 19A) comprising a radial and a tangential component, their radial extent corresponding to the radial length of the portions (23A, 24A) on the guideways (23, 24).

5. A roof hatch (2) according to Claim 4, characterised in that one of the cam surfaces (18) only consists of the portion (18A) while the other (19) additionally comprises a substantially quadrantal portion.

6. A roof hatch (2) according to one of the preceding Claims, characterised in that the guideways (23, 24) are disposed concentrically in relation to the pivot axis (17) of the control cam (16).

7. A roof hatch (2) according to Claim 6, characterised in that both guideways (23, 24) have the same radius.

8. A roof hatch (2) according to one of the preceding Claims, characterised in that a twist grip (25) is disposed on the control cam (16).

9. A roof hatch (2) according to one of Claims 1 to 7, characterised in that there are on the control cam (16) a set of teeth (20) engaged by a drive pinion (21) of an electric motor (22).

10. A roof hatch (2) according to one of the preceding Claims, characterised in that starting from a neutral position, it is possible to actuate both an alternate as well as a simultaneous opening of the cover ends which are connected to the push-out devices (10) with an angle of rotation of 180° of the control cam (16).

## Revendications

1. Tabatière (2), notamment pour pavillons de véhicule, comprenant, monté dans un toit fixe (1), un cadre (4) dont le bord interne délimite une ouverture de toit (3) qui peut être à volonté obturée ou libérée par un couvercle (5) en actionnant des dispositifs de soulèvement (10, 12) par l'intermédiaire desquels le couvercle (5) est monté sur deux côtés opposés du cadre (4), la manoeuvre de ces dispositifs étant assurée par un disque de commande (16) monté tournant au centre de la face inférieure du couvercle (5) et comportant au moins deux pistes de coulissement (18, 19) avec lesquelles sont en prise des tiges coulissantes (14), caractérisée en ce que chacune des tiges coulissantes (14) est articulée en rotation par une extrémité sur un dispositif de soulèvement (coulisseau 12) tandis que l'autre extrémité, en prise avec une des pistes de coulissement (18, 19), est guidée en plus par une piste de guidage (23 ou 24), sensiblement circulaire et solidaire du couvercle.

2. Tabatière (2) selon la revendication 1,
caractérisée en ce que
la piste de guidage (23) d'une de ces tiges (14) correspond sensiblement à un demi-cercle tandis que la piste de guidage (24) de l'autre tige (14) correspond sensiblement à un quart de cercle.

3. Tabatière (2) selon une des revendications précédentes,
caractérisée en ce que
les pistes de guidage (23, 24), à leurs extrémités se faisant face par rapport à l'axe de rotation (17) du disque de commande (16) comportent chacune une partie (23a, 24a) dirigée radialement vers l'intérieur.

4. Tabatière (2) selon la revendication 3,
caractérisée en ce que
les pistes de coulissement (18, 19) comportent, se faisant face par rapport à l'axe de rotation (17) du disque de commande (16), chacune une partie (18a, 19a) présentant une composante radiale et une composante tangentielle, l'importance de la composante radiale étant égale à la longueur radiale de la partie (23a, 24a) correspondante des pistes de guidage (23, 24).

5. Tabatière (2) selon la revendication 4,
caractérisée en ce que
une des pistes de coulissement (18) est constituée de la seule partie (18a), tandis que l'autre piste (19) comporte en plus une partie correspondant sensiblement à un quart de cercle.

6. Tabatière (2) selon une des revendications précédentes,
caractérisée en ce que
les pistes de guidage (23, 24) sont centrées sur l'axe (17) du disque de commande.

7. Tabatière (2) selon la revendication 6,
caractérisée en ce que
les deux pistes de guidage (23, 24) ont le même rayon.

8. Tabatière (2) selon une des revendications précédentes,
caractérisée en ce que
le disque de commande (16) est équipé d'une poignée de manoeuvre (25).

9. Tabatière (2) selon une des revendications 1 à 7,
caractérisée en ce que
le disque de commande (16) porte une denture (20) avec laquelle est en prise le pignon d'entraînement (21) d'un moteur électrique (22).

10. Tabatière (2) selon une des revendications précédentes,
caractérisée en ce que
en partant d'un position zéro, on peut soit alternativement, soit simultanément soulever les extrémités du couvercle associées respectivement aux dispositifs de soulèvement (10), en faisant tourner de 180° le disque de commande (16).
